# EUROPEAN PATENT APPLICATION

(11) **EP 2 647 766 A2**
(43) Date of publication of application: **09.10.2013**
(21) Application number: 13160000.9
(22) Date of filing: 19.03.2013
(51) Int. Cl.: E02D 27/42

(54) **A method of orienting a section of an object at a desired angle**

(30) Priority: 22.03.2012 NL 1039485
(71) Applicant: IV-Consult B.V., 3351 LD Papendrecht (NL)
(72) Inventor: Van Kerchove, Petrus, 3328 KC Dordrecht (NL)
(74) Representative: Altenburg, Bernardus Stephanus Franciscus

(57) **Abstract**

The invention relates to a method of orienting a main section of an object such as an off-shore wind turbine or a wave-based energy generator at a desired angle with reference to a support surface such as a sea-floor. According to the invention
- the object comprises a base section for contact with the support surface,
- the base section and the main section can be tilted relative to one another;

said method comprises the step of changing the relative tilt of the main section and the base section so as to orient the main section at the desired angle using actuators. The invention also relates to an object.

## Description

The present invention relates to a method of orienting a main section of an object at a desired angle with reference to a support surface for supporting said object.

It is known in the art to put an object onto a support surface, e.g. a seabed, and use hydraulic jacks to orient the object at a desired angle, such as vertical. The object has for example three legs, each provided with an actuator that for example comprises a hydraulic cylinder and piston, with the pistons resting on the support surface. When the object is placed on a sloping surface, the actuators are driven to compensate for the slope. If the object subsides causing the object to deviate from the desired angle to an undesirable extent, one or more of the actuators will be actuated to orient the object again at the desired angle.

A disadvantage of this method is that it is rather complicated and requires relatively much power. Maintenance of the actuators can also be an issue, especially in case the object is at least partially under water, for example when the object is resting on a seabed.

The object of the present invention is to alleviate at least one of the above problems.

To this end, a method according to the preamble is **characterized in that**
- the object comprises a base section for contact with the support surface,
- the base section and the main section can be tilted relative to one another, the base section defines a base axis and the main section defines a main axis, and the relative tilting of the base section and the main section results in a change in the relative tilt of the base axis and the main axis;
said method comprises the step of changing the relative tilt of the main section and the base section using actuators so as to orient the main axis of the main section at the desired angle.

Thus the number of actuators may be reduced and/or located more centrally, facilitating maintenance and reducing cost. It is no longer necessary to lift the weight of part of the base section, reducing the amount of power needed to orient the main section. Also the actuators may be located higher, which in case of maintenance by divers reduces risk and cost. The desired angle may be set before, during or after the object has been positioned on the support surface. It can be changed again, e.g. in case of subsidence, thus re-orienting the main section of the object. The method can be used during use of the object to compensate for possibly changing sea current or tides. Thus a lighter construction is possible, saving material. For many applications, in particular off-shore applications, the main section will comprise a mast (tower). In that case, the desired angle is in general parallel to the centreline of said mast. The object is for example an off-shore wind turbine or a wave-based energy generator. The term "for contact with the support surface" means that the object may be placed with onto said support surface, or is partially embedded in and protruding from said support surface.

US4830542 discloses a levelling method that abstains from levelling machinery (column 3 line 51). The wafer is used to achieve a level surface for a production template. Like the present invention, it allows for compensating a foundation such as a monopile that is not exactly vertical. According to US4830542, the deviation of the monopile from the vertical is measured. The wafer is pre-fabricated to compensate for said deviation. Only then, the production template is positioned onto the now level wafer. The present invention does not require such pre-fabrication. In addition, the present invention allows for re-orientation if conditions change, e.g. in case of subsidence or if the object is moved to another location.

According to a favourable embodiment, the main axis is oriented upright.

The upright orientation, i.e. substantially vertical (e.g. within 2° of vertical, preferably within 1° of vertical), is an important orientation.

According to an especially preferred embodiment, the object comprises a first element and a second element,
- the first element is located between the main section and the base section, and
- the second element is located between the main section and the first element;
said first element is rotatable with respect to
- the base section, defining a first plane of rotation, said first plane of rotation defining a first rotational axis at an angle transverse to the base of the base section, and
- the second element, defining a second plane of rotation, said second plane of rotation defining a second rotational axis that is
- at an angle γ with the first rotational axis, and
- at an angle with the main axis;
and said second element is rotatable with respect to the base section independently of the first element;
wherein at least one of the first element and the second element is rotated to orient the main axis of the main section at the desired angle.

Because of the two rotational planes defined by the first element it can be considered a wedge-shaped element, with a taper of γ which will in general be less than 10°, and in practice less than 5°. Apart from the simple construction, the power required to rotate the first element is reduced to a large extent compared to a hydraulic jack operating in vertical direction thanks to this wedge-shape, reducing the cost of the device necessary to achieve the orientation and reducing the strain on said device, reducing the need for maintenance. According to a very basic embodiment, the second element is fixedly connected to the main section of the object, e.g. as an integral part thereof. To compensate for a sloping support surface, the slope having an angle α and an azimuth β, at least one of the following rotations will be performed in no particular order:
- the first element is rotated relative to the second element (main section) to define a total slope equal to α; and
- the first and the second element are rotated to an azimuth of 180° - β with a total slope equal to α so as to compensate for the slope of the sloping support surface. The rotations of the first element and the second element may be performed in no particular order and may be performed simultaneously. However, in general they will be performed in an order and in a direction such that the deviation of the main axis from the desired angle is not increased.

According to a favourable embodiment, the second element is rotatable with respect to the main section, defining a third plane of rotation.

This allows orientation of the main section without change of its azimuth. It also makes it possible to seal the first section and the second section to be non-rotatably connected to each other using stationary means such as bellows that allow for tilting. This is important if the object is at least partially under water. Moreover, because the desired angle of the main section can be achieved without rotating it about an upright axis of rotation, the force required is reduced. Even better, the first element and the second element can be rotated in a co-ordinated manner such that the main section remains at substantially the same height. This is in contrast to the method according to the state of the art where the whole object is lifted during orientating, further reducing the forces needed.

According to a favourable embodiment, the second element is rotatable with respect to the main section about an axis of rotation parallel to the main axis of the main section.

This facilitates orientating the main section.

According to a favourable embodiment, the first element and the base section are rotatable relative to one another about an axis of rotation parallel to the normal defined by the base of the base section.

This facilitates orientating the main section. The base of the base section is defined by those parts of the base section that - when the object were to rest on a flat horizontal support surface - are in contact with said flat horizontal support surface.

According to a favourable embodiment, at least one of the actuators comprises a pinion for driving a gear having internal toothing.

Thus a large force can be exerted efficiently.

According to a favourable embodiment, the object is positioned with its base section on the floor of a body of water.

This is an important application of the present invention. The body of water is for example the sea.

According to a favourable embodiment, the main section extends partially above the body of water.

This allows the use of the main section for various purposes. For example, it is possible to perform scientific measurements such as wind speed over a long time.

Finally, the present invention relates to an object comprising a base section and a main section, wherein the object comprises actuators, and the base section and the main section can be tilted relative to one another using said actuators, the base section defines a base axis and the main section defines a main axis, and the relative tilting of the base section and the main section results in a change in the relative tilt of the base axis and the main axis.

Such an object may for example be used off-shore. It may comprise for example a wind turbine or a device for generating energy using waves. The present invention explicitly covers all the embodiments and combinations thereof of the object disclosed in the subclaims of the method according to the invention; re-iteration thereof in connection to the object is solely abstained from for the sake of brevity.

The present invention will now be illustrated with reference to the drawing where
Fig. 1a shows a sideview of an object;
Fig. 1b shows a side view of the object of Fig. 1a on a slope;
Fig. 2a - b show a side view of a model to explain the mechanism of a more sophisticated alternative object;
Fig. 2c shows a front view of the model shown in Fig. 2b;
Fig. 3 shows a cut-out view of an implementation of the model of Fig. 3;
Fig. 4 shows a bellows-protected implementation of Fig. 3; and
Fig. 5 shows a cut-out view of the.

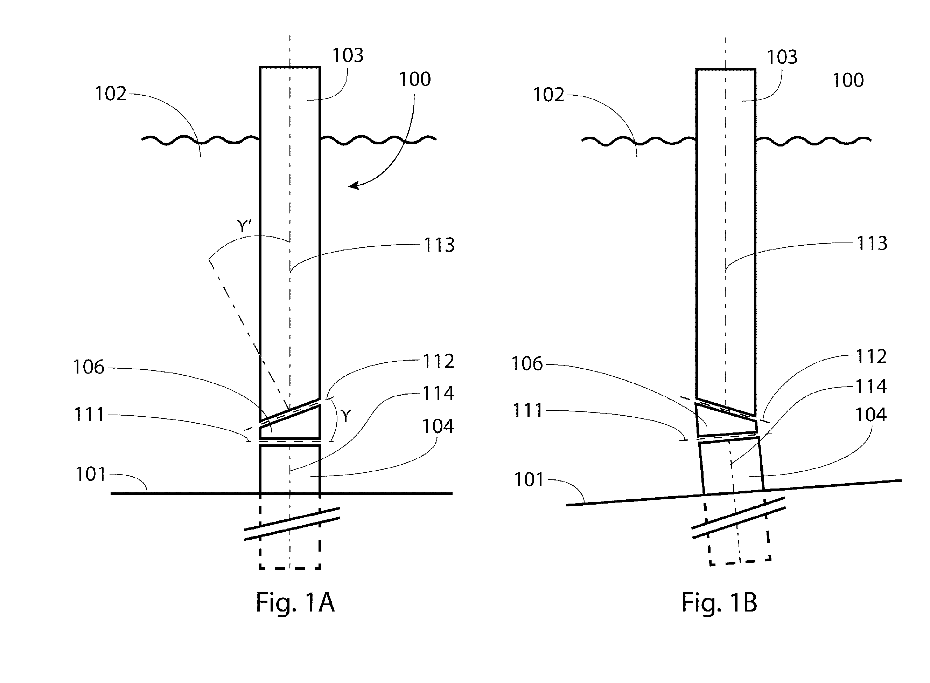

Fig. 1a shows a first and very basic embodiment of an object 100 according to the invention. The object 100 may rest on the floor 101 of a body of water 102. In the embodiment shown in Fig. 1a, the object 100 comprises
   - an elongated main section 103 in the form of a pipe (mast), and
   - a base section 104, here a pile driven into the floor 101. If the base section 104 subsides, the tilt can be corrected for as explained below.

Between the main section 103 and the base section 104 there is a first element 106. This first element 106 is tapered (shown exaggerated and indicated as angle γ) and it is rotatable with respect to the base section 104 (in a first plane of rotation 111) and rotatable with respect to the main section 103 (defining a second plane of rotation 112 at an angle γ' with respect to the main axis 113). The main section 103 has a main axis 113 that is at an angle with the second plane of rotation 112 present between the first element 106 and the main section 103. The main section 103 as the second element is rotatable relative to the base section 104 as well. The base section 104 has a base axis 114 which is in the embodiment shown is perpendicular to a base defined by the proximal ends of the legs 105.

As the floor 101 is level, the azimuth of the main section 103 and the azimuth of the first element 106 are chosen to compensate each other. Thus the main axis 113 of the main section 103 is parallel to the base axis 114 of the base section 104.

Fig. 1b shows the object 100 of Fig. 1a, but the base section 104 has subsided (e.g. because the floor 101 is very muddy). The first element 106 and the main section 103 (which serves as a second element) have been rotated relative to the base section 104, compensating for the tilt of the base section 104. Thus, in this case the main axis 113 of the main section 103 deviates from being parallel to the base axis 114 of the base section 104.

An alternative base section 104 could rest on the floor 101, for example with legs.

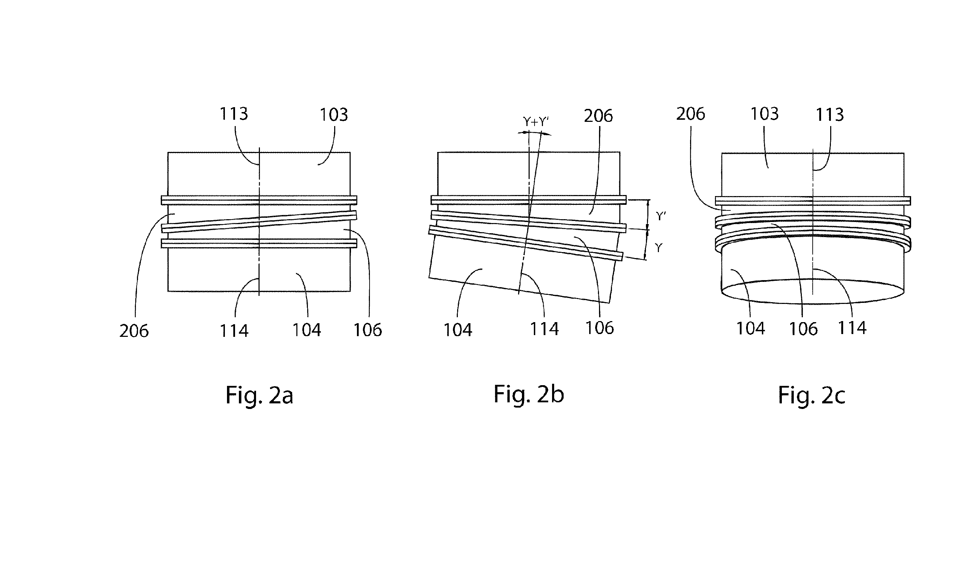

Fig. 2a shows a model of an alternative, more sophisticated object 100 to explain the working thereof. Visible are part of the main section 103, part of the base section 104, the first element 106 and a second element 206 that is the same as the first element 106. It connects the first element 106 to the main section 103.

The highest part of the first element 106 is at the right. The highest part of the second element 206 is at the left. Because the elements have the same taper (γ and γ' are equal), the effect on tilt is canceled out and the main axis 113 and the base axis 114 are parallel.

In Fig. 2b the second element 206 has been rotated over 180° relative to both the main section 103 and relative to the first element 106. The first element 106 has not been rotated. As a result, the angles γ and γ' of the tapered elements add up, and the base axis 114 deviates 2 times γ (γ and γ' being equal) from the vertical. Thus is possible to correct for a slope of the base of the object of 2γ.

If the slope of the floor 101 runs the other way (like shown in Fig. 1b), the first element 106 would have been rotated over 180°.

Fig. 2c shows a front view of the section shown in Fig. 2b.

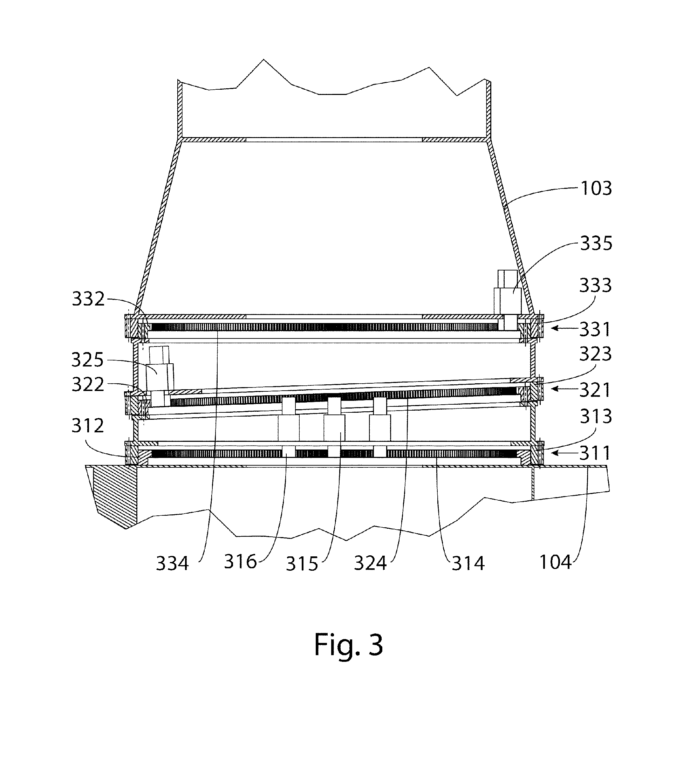

Having explained the basic mechanism with reference to Fig. 2a - c, now a practical implementation thereof will be discussed. Fig. 3 shows a cut-out view of the alternative object 100, comprising a part of the main section 103 and a part of the base section 104.

The base section 104 is connected to a first bearing 311, more specifically to the inner race ring 312 thereof, and the first element 106 is connected to the outer race ring 313 of said first bearing 311. The bearing 311 is for example a commercially available bearing known for yawing a wind turbine (turning the nacelle with respect to the tower). It may also be a slide bearing. The inner race ring 312 is provided with an annular gear wheel 314 (i.e. with inward-facing teeth). The first element 106 is provided with motors 315 (which rotate together with the first element 106) that drive gear wheels 316 which in turn drive the annular gear wheel 314 and hence the inner race ring 312.

Similarly, the first element 106 is connected to a second bearing 321, more specifically to the inner race ring 322 thereof, and the second element 206 is connected to the outer race ring 323 of said second bearing 321. To rotate the first element 106 with respect to the second element 206, the inner race ring 322 is provided with an annular gear wheel 324 and the second element 206 is provided with motors 325 for driving the annular gear wheel 324.

Finally, the second element 206 is connected to a third bearing 331, more specifically to the inner race ring 332 thereof, and the part of the main section 103 is connected to the outer race ring 333 of said third bearing 331. To rotate the second element 206 with respect to the main section 103, the inner race ring 332 is provided with an annular gear wheel 334 and the main section 103 is provided with motors 335 for driving the annular gear wheel 334.

The use of multiple motors provides redundancy, reducing the need for unscheduled maintenance.

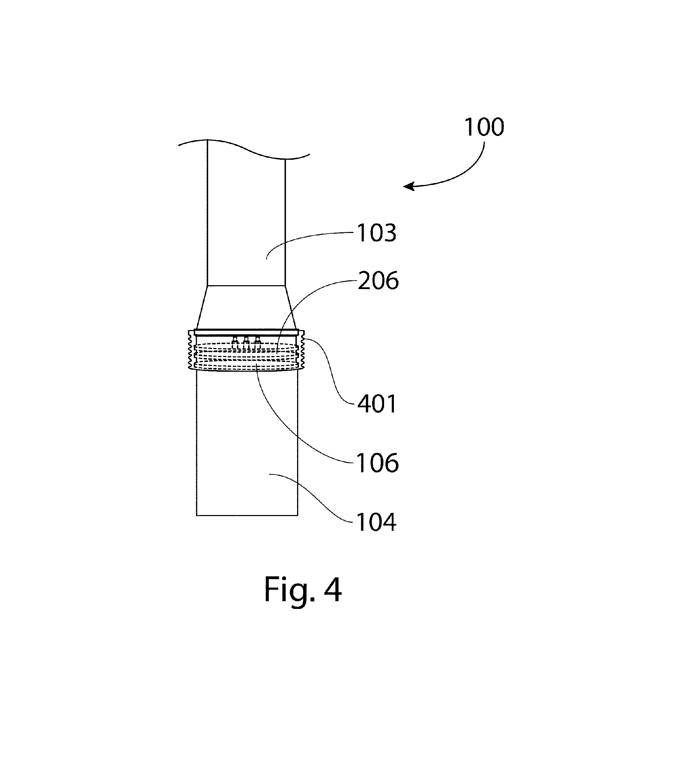

Fig. 4 shows the system discussed with reference to Fig. 3 for orienting the main section 103. As the mechanism allows the main section 103 to maintain its azimuth, i.e. it is stationary with respect to the base section 104, the components such as the bearings can be protected from water using bellows 401.

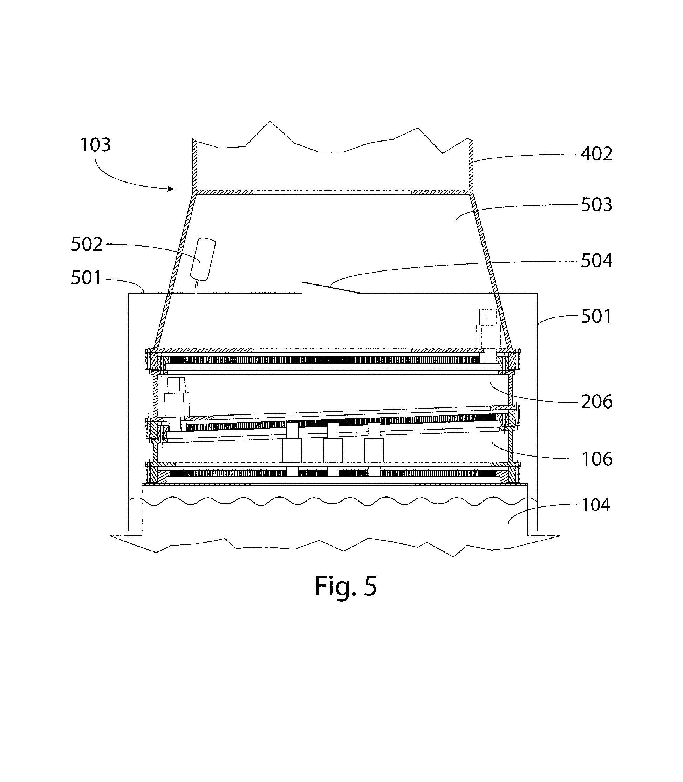

Fig. 5 corresponds to Fig. 3, where the junction between the main section 103 and the base section 104 is protected from water by a diving bell 501. A compressor 502 provides air at a pressure correlated to the depth of the base section 104 so as to keep bearings and motors dry.

There may be a pressure chamber 503, allowing maintenance personnel to enter the diving bell 501 via hatch 504, obviating the need for divers.

Obviously this embodiment may be combined with other manners of protection, such as the bellows 401 mentioned above, seals for bearings as are known in the art etc. Also, in addition or alternatively, the bearings may comprise bearing seals.

## Claims

1. A method of orienting a main section (103) of an object (100) at a desired angle with reference to a support surface for supporting said object (100), **characterized in that**
- the object (100) comprises a base section (104) for contact with the support surface,
- the base section (104) and the main section (103) can be tilted relative to one another, the base section (104) defines a base axis (114) and the main section (103) defines a main axis (113), and the relative tilting of the base section (104) and the main section (103) results in a change in the relative tilt of the base axis (114) and the main axis (113);
said method comprises the step of changing the relative tilt of the main section (103) and the base section (104) using actuators (315, 325, 335) so as to orient the main axis (113) of the main section (103) at the desired angle.

2. The method according to claim 1, wherein the main axis (113) is oriented upright.

3. The method according to claim 1 or 2, wherein the object (100) comprises a first element (106) and a second element (206),
- the first element (106) is located between the main section (103) and the base section (104), and
- the second element (206) is located between the main section (103) and the first element (106);
said first element (106) is rotatable with respect to
- the base section (104), defining a first plane of rotation (111), said first plane of rotation (111) defining a first rotational axis at an angle transverse to the base of the base section (104), and
- the second element (206), defining a second plane of rotation (112), said second plane of rotation (112) defining a second rotational axis that is
- at an angle γ with the first rotational axis, and
- at an angle with the main axis (113);
and said second element (206) is rotatable with respect to the base section (104) independently of the first element (106);
wherein at least one of the first element (106) and the second element (206) is rotated to orient the main axis (113) of the main section (103) at the desired angle.

4. The method according to any of the preceding claims, wherein the second element (206) is rotatable with respect to the main section (103), defining a third plane of rotation.

5. The method according to claim 4, wherein the second element (206) is rotatable with respect to the main section (103) about an axis of rotation parallel to the main axis (113) of the main section (103).

6. The method according to any of the claims 3 to 5, wherein the first element (106) and the base section (104) are rotatable relative to one another about an axis of rotation parallel to the normal defined by the base of the base section (104).

7. The method according to any of the claims 3 to 6, wherein at least one of the actuators comprises a pinion (316) for driving a gear having internal toothing (314).

8. The method according to any of the preceding claims, wherein the object (100) is positioned with its base section (104) on the floor (101) of a body of water (102).

9. The method according to claim 8, wherein the main section (103) extends partially above the body of water (102).

10. An object (100) comprising a base section (104) and a main section (103), **characterized in that** the object (100) comprises actuators (315, 325, 335), and the base section (104) and the main section (103) can be tilted relative to one another using said actuators (315, 325, 335), the base section (104) defines a base axis (114) and the main section (103) defines a main axis (113), and the relative tilting of the base section (104) and the main section (103) results in a change in the relative tilt of the base axis (114) and the main axis (113).
